# EUROPEAN PATENT SPECIFICATION

(11) **EP 4 312 547 B1**
(45) Date of publication and mention of the grant of the patent: **18.06.2025**
(21) Application number: 22717902.5
(22) Date of filing: 24.03.2022
(51) Int. Cl.: A01N 37/06, A01P 5/00

(54) **USE OF SORBIC ACID AND SALTS THEREOF AS A NEMATOCIDE**
VERWENDUNG VON SORBINSÄURE UND DEREN SALZEN ALS NEMATOZIDE
UTILISATION D'ACIDE SORBIQUE ET DE SES SELS EN TANT QUE NÉMATOCIDE

(30) Priority: 24.03.2021 IT 202100007145
(43) Date of publication of application: 07.02.2024
(73) Proprietor: Gonella Invent Societa' A Responsabilita' Limitata Semplificata, 12046 Montà (IT)
(72) Inventor: GONELLA, Silvio, 12046 Monta' (IT)
(74) Representative: Zaccaro, Elisabetta
(86) International application number: PCT/IB2022/052706
(87) International publication number: WO 2022/201088

(56) References cited:
- CN-A- 104 738 087
- DJIAN C ET AL: "NEMATOCIDAL PROPERTIES OF CARBOXYLIC ACIDS AND DERIVATIVES", PESTICIDE BIOCHEMISTRY AND PHYSIOLOGY, ACADEMIC PRESS, US, vol. 50, no. 3, 1 January 1994 (1994-01-01), pages 229 - 239, XP000618468, ISSN: 0048-3575, DOI: 10.1006/PEST.1994.1075
- DATABASE BIOSIS [online] BIOSCIENCES INFORMATION SERVICE, PHILADELPHIA, PA, US; December 2004 (2004-12-01), HUSSAINI S S ET AL: "Effect of adjuvants on survival and pathogenicity of some indigenous isolates of entomopathogenic nematodes", XP002804850, Database accession no. PREV200510149436
- INDIAN JOURNAL OF PLANT PROTECTION, vol. 32, no. 2, December 2004 (2004-12-01), pages 111 - 114, ISSN: 0253-4355
- HORST K ET AL: "Survival of Anisakis larvae in marinated herring fillets", INTERNATIONAL JOURNAL OF FOOD SCIENCE AND TECHNOLOGY, BLACKWELL SCIENTIFIC PUBLICATIONS, OXFORD, GB, vol. 29, 1 January 1995 (1995-01-01), pages 661 - 670, XP002522764, ISSN: 0950-5423
- VRAIN T C: "FATTY ACIDS AND THEIR DERIVATIVES FOR NEMATODE CONTROL", JOURNAL OF NEMATOLOGY, SOCIETY OF NEMATOLOGISTS, COLLEGE PARK, MD, US, vol. 12, no. 4, 1 October 1980 (1980-10-01), pages 240, XP000618257, ISSN: 0022-300X

## Description

### FIELD OF THE INVENTION

The invention concerns the use of salts of sorbic acid, a substance of natural origin present in rowan fruits, as a nematocide. Methods for treating a substrate, comprising the step of applying an effective dose of sorbic acid, or salt thereof, to said substrate, are also described.

### STATE OF THE ART

Phytoparasitic nematodes cause considerable damage to crops of agricultural importance, especially when these are cultivated intensively and/or in a monoculture regime. Among the most harmful nematodes, several species are endowed with a wide polyphagia, so the use of rotations or alternations is often difficult and not cost effective in areas suited to high-income crops.

In many situations, the administration of synthetic nematocides, whether they are fumigants or non-volatile products, is an indispensable practice to achieve an economically sustainable company production.

In order to obtain the maximum benefit with the nematocide treatment, both in quantitative and qualitative production terms, it is necessary to know the toxicity of the substance against the nematode to be fought, the distribution dynamics and the degradability in the soil to be treated, in relation to intrinsic factors such as texture, chemical composition, organic substance content, as well as external factors such as climate, precipitation, temperature and ongoing culture.

It is not easy to calculate the damage caused to agricultural crops by nematodes because, in addition to direct damage to the phytohelminth, they can also lead to concomitant infections by bacteria, fungi and viruses. Production losses are due both to a decrease in yields (quantitative) and a lowering of the product quality standards.

Having said this, however, it should be emphasized that, in the panorama of nematocidal active ingredients that may currently be used in agriculture in the EU, the number of solutions allowed is constantly decreasing. The low number of active ingredients (many of which are risky for the operator and subjected to contingent interventions established on the label, i.e. maximum 1-2 applications per crop cycle/season) leads to an increase in the risk of onset of resistance by nematodes, and of becoming likely less effective. Given their characteristics, some products will be subject to future restrictions, becoming possible candidates for revocation.

As an example, it is possible to mention substances currently used (Abamectin, Oxamil, Fosthiazate) that were key actors in the fight against nematodes over the last 40 years which, due to the acute and chronic toxicity values and their low selectivity towards non-target organisms, will be revoked over the years.

Djian et al. ("Nematocidal properties of carboxylic acids and derivatives"; Pest. Biochem. and Physiol., Vol 50, no.3 (1994)) describe the nematocidal properties of some carboxylic acids and derivatives thereof. The greatest efficacy is evident in dicarboxylic acids having a double bond. Despite having an activity on nematodes, these substances are toxic to humans and would lead to irreparable damage to the roots due to the strong pH shift during the application by hose.

For the reasons listed above, there is currently an evident need for new generation substances, such as botanicals, which could replace synthetic chemicals. These substances, often present in nature and sometimes known for use in other fields (e.g. terpenes), should prove to have nematocidal activity, but at the same time have a lower risk for the operator, the consumer and the environment.

A general object of the present invention therefore consists in providing a substance of natural origin for use as a nematocide, which does not present the disadvantages described for the substances currently used in the field for the same purposes.

### SUMMARY OF THE INVENTION

In a first aspect, the invention therefore concerns the use of a sorbic acid salt for killing an insect belonging to the phylum of nematodes, wherein said sorbic acid salt is present in an effective dose, wherein said effective dose allows to kill at least 70% of nematodes, and wherein said sorbic acid salt is the only active substance having a nematocidal effect and wherein said use is non-therapeutic. The invention refers to the use of sorbic acid salts, all references to sorbic acid are for comparison only.

Advantageously, sorbic acid is a non-toxic substance for the operator and the consumer, shows complete selectivity towards beneficial insects or pollinators, and allows to control nematodes in the larval or egg forms. It is also surprising how the nematocidal activity has no previous confirmation, considering that no insecticidal activity (insect kingdom) or acaricidal activity has been found in laboratory tests, unlike most of the nematocides currently used which have both characteristics. (insecticide or acaricide/nematocide). The use of sorbic acid as a nematocide is known in the art for example form Djan and others in "Nematocidal properties of carboxylic acids and derivatives" (PESTICIDE BIOCHEMISTRY AND PHYSIOLOGY, ACADEMIC PRESS, US, vol. 50, no. 3).

### DESCRIPTION OF THE FIGURES

Figure 1: Microscopy photograph of mobile *Meloidogyne* J2 larvae in the control, as illustrated in Example 1.
Figure 2: Microscope photograph of the solution containing *Meloidogyne* J2 nematodes in contact for 24 h with 1 mg/ml of potassium sorbate (Test 3). Detail of *Meloidogyne* J2 larvae tissue damage in Test 2 after 24 h of exposure which causes their death.
Figure 3: Detail of a *Meloidogyne* nematode with evident and irreparable signs of tissue degeneration after 24 h exposure to 1 mg/ml of potassium sorbate (Test 3).
Figure 4: Detail of a *Meloidogyne* J2 nematode after 24 h exposure to the Reference substance. It is possible to notice different degeneration symptoms and thus hypothesize a different mechanism of action of the compared substances.
Figure 5: Detail of the field test in which there is a greater development of the roots in the Treated (Test 2) compared to the Control (Thesis 1) affected by nematodes, as detailed in Example 2.
Figure 6: Vigor comparison between Control (Test 1) and Treated (Test 2) in a field strongly subject to damage by nematodes. It is easy to see a more homogeneous development and a greater number of leaves and fruits, thanks to the treatments with sorbic acid and its nematocidal effect.

### DETAILED DESCRIPTION OF THE INVENTION

The invention therefore concerns the use of a sorbic acid salt, such as potassium sorbate, calcium sorbate, sodium sorbate and the salts derived from the reaction of sorbic acid with alkali metals, for killing an insect belonging to the phylum of nematodes, wherein said sorbic acid or salt thereof is present in an effective dose, wherein said effective dose allows to kill at least 70% of nematodes, and wherein said sorbic acid salt is the only active substance having a nematocidal effect and wherein said use is non-therapeutic.

It has been surprisingly seen that salts of sorbic acid have an effect on both the J2 larvae and the hatching of nematode eggs present in the vegetable galls, and is active regardless of temperature.

In the present invention, when the term "sorbic acid" is used, it is also intended to include: 2,4-hexadienoic acid, trans,trans-2,4 hexanoic acid, (E,E) 2,4-hexanoic acid, (E,E)-1,3-pentadiene-1-carboxylic.

Sorbic acid is extracted from the genus *Sorbus* and other naturally occurring Rosaceae or synthesized artificially. Its molecular formula is as follows: C₆H₈O₂: 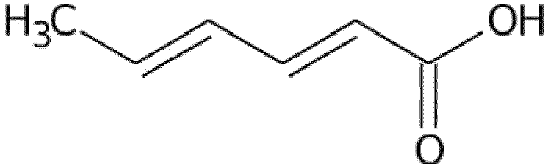 Sorbic acid may be used in pure or diluted form, a derivative thereof in the form of salt may be used. The present disclosure comprises the use of either the synthetic form of sorbic acid, and possible related salts thereof, or sorbic acid naturally extracted from the fruit of the plants mentioned.

Sorbic acid has known toxicity, as there are numerous studies in this regard given its use in the food sector; the data in fact confirm a low risk, having a Lethal Dose 50: LD50 >3000 mg/kg (OECD Test Guideline 402), Lethal Concentration 50: LC50 5.1 mg I (OECD Test Guideline 403) and a partition coefficient: n-octanol/water, log Pow: 1.32 (25°C) (a value that does not foresee any risks of bioaccumulation). Sorbic acid and salts thereof are therefore a valid alternative to products currently on the market, and advantageously involve a lower risk for the operator, the consumer, and the environment. In the current state of the art, sorbic acid is recognized as a preservative or food additive having an effect on yeasts, molds and bacteria; no effects on insects or mites of different kinds have been found, but it is known that the active substance has an evident nematocidal effect.

In the present invention, when the definition "effective dose" or "biologically effective dose" is used, it means a dose which allows to kill at least 70%, up to 100%, of the nematodes present.

A dose ranging from 0.0001% to 0.001% is considered a "sub-lethal" or "nematostatic" dose, and therefore is a dose which may not kill the nematode but inhibits its mobility and pest capacity. In fact, by comparing the data with a test carried out in the laboratory in a jar, it was possible to highlight a greater number of immature forms following the application of sorbic acid. This could therefore show a nematostatic effect, affecting fertility in addition to a slowdown of the normal population development cycle, demonstrated by the low number of J2 larvae in the treated compared to the test, and by the greater number of undifferentiated females (without ovisack, therefore immature, delaying oogenesis and without the possibility that these release eggs in the substrate), and therefore to a lowering of the new potential future generations.

It was surprisingly shown that even very low concentrations of salts of sorbic acid such as potassium sorbate, are sufficient to have a nematocidal action. In particular, it was proven that the lethal dose for killing at least 70% of nematodes is a dose in the range from 0.001% to 20% p/p, preferably from 0.05% to 15% p/p, more preferably from 0.01% to 5% p/p. It was surprisingly shown that this substance is active on pests of the nematode phylum, but no effects on insects or mites of other phylum of agricultural interest were found, while the effect on fungi and bacteria is known in the state of the art.

In addition to the activity as a nematocide, sorbic acid and salts thereof were shown to have nematostatic activity.

In one embodiment, in the use of the present invention, said salt of sorbic acid is present in a composition comprising an agriculturally acceptable carrier surfactant, additive, adjuvant or diluent. Examples can be water, 1,2 benzisothiazol-3(2H)-one, naphtha-derived solvents, glycerin, organic acids.

In the final composition of the commercial product, sorbic acid or salts thereof can be included in an amount ranging from 20% to 99.9% (percentages below those indicated are used to exploit the anti-fermentation characteristics in a mixture with other active ingredients used as pesticides, fertilizers or biostimulants).

In another embodiment, said composition is formulated in the form of granules, powder, emulsion, spray, aerosol, capsule, microcapsule, gel, or wetting agent.

Advantageously, sorbic acid can be applied in the form of a solid product to be diluted as sorbic acid as such or as derived salts thereof, in the form of a concentrated solution of sorbic acid or salts thereof to be subsequently diluted, in the form of dry extract of the Rosaceae family obtained by physical/chemical action and subsequently diluted in water, in the form of glyceric extract of the Rosaceae family subsequently diluted in water, in the form of an extract of the Rosaceae family with organic solvent and subsequently diluted in water, as sorbic acid or salts thereof used as powder as such or mixed with co-formulations for the treatment of edible or ornamental crops or seeds such as fertilizers or biostimulants.

Given the characteristic of this substance and its easy availability and synthesis, it can be used as different formulations, for example:
- formulation to be administered by liquid root administration via irrigation system having an effect on nematodes;
- formulation to be administered with a fixed irrigation system with nebulizers on bare ground;
- solid formulation for powder use, in granules or pellets for administration on soil.
- solid formulation in powder for seeds tanning.

This formulation could be classified as a pesticide/nematocide, according to the correct classification, but other possible legislative alternatives are also protected, biostimulant, fertilizer or corroborant.

Preferably the use of sorbic acid or salts thereof as nematocide is for use against nematodes belonging to a genus selected from the group consisting of *Meloidogyne, Globodera, Heterodera, Pratylenchus,* Rotylenchulus *Trichodorus, Paratylenchus, Longidorus, Hylonema,* Ditylenchus, *Meloidodera* o *Afenestrata,* more preferably to a genus selected from the group consisting of *Meloidogyne, Globodera, Ditylenchus* or *Heterodera.*

In a preferred embodiment, the use of sorbic acid or salts thereof as nematocide is for use against nematodes belonging to a species selected from the group consisting of *Meloidogyne incognita, Meloidogyne arenaria, Meloidogyne hapla* or *Meloidogyne enterolobii.*

In a further embodiment, the use of sorbic acid or salts thereof as nematocide is for the treatment of a substrate, for example an agricultural substrate. In a preferred embodiment, said agricultural substrate is a substrate in which the roots of a plant develop, preferably said agricultural substrate is selected from the group consisting of a cultivation substrate, a soil or a loam and allows the growth of a vegetal species or an annual or multi-year vegetal crop.

The concept underlying the invention is to put a biologically effective dose of salts of sorbic acid in contact with a nematode or with its environment, soil, substrate, or surrounding rhizosphere.

In another aspect, the use of salts of sorbic acid according to the present invention is for the treatment of agricultural, civil, or domestic surfaces and for the treatment of parks, playgrounds, and gardens.

Carrying out laboratory tests with sorbic acid, in pure form or in the form of Potassium Sorbate, Calcium Sorbate and Sodium Sorbate, it was surprisingly observed that this had an effect on larvae of the genus *Meloydogine,* on *Heterodera* and *Globodera.*

Having analyzed the main formulations used for the control of nematodes and without being bound by any theory, it is possible to confirm that sorbic acid and salts thereof, such as potassium sorbate, calcium sorbate, sodium sorbate and the salts derived from the reaction of sorbic acid with alkali metals, have a different mode of action and, given the double effect both on the J2 larvae and on the hatching of the eggs present in the galls, the low influence of temperature, the low toxicity for the operator and the consumer, its complete selectivity towards beneficial insects or pollinators and the control of nematodes in larval or egg form, it is an innovative solution for sustainable agriculture, which allows also a minimum risk for the operator and the consumer, in addition to the lower environmental impact and selectivity towards useful species.

In the tests carried out, the effect of the compounds sorbic acid, potassium sorbate, calcium sorbate, sodium sorbate and the salts derived from the reaction of sorbic acid with alkali metals was shown, following exposure of the larva to the same, or following contact with the galls containing the eggs, thus delaying and limiting their hatching.

Examples of embodiments of the present invention, provided for illustrative purposes, are reported below. The examples concerning sorbic acid are comparative.

### EXAMPLES

### Example 1:

Sorbic acid (E200) is a polyunsaturated fatty acid commonly used as a food preservative, as well as potassium sorbate (E202), which is the potassium salt of sorbic acid. Both these products have antifungal and antibacterial properties, and are used as preservative additives in the food industry.

Sorbic acid is contained in various genera of the Rosaceae family and not only in particular in the genus *Sorbus spp.* Its wide use as a preservative in the food and cosmetic industry (E200-E201-E202-E203) has enabled the development of the substance by synthetic route.

Commercial formulations of sorbic acid or salts thereof, with technical data sheets provided by manufacturers that guarantee a purity greater than 90%, have both been tested. The conversion ratio between potassium sorbate and sorbic acid is of 1.34 (purity > 99%).

It was therefore shown that the active substance is indeed responsible for the death of nematodes in the J2 (mobile) larval form.

In particular, it is hypothesized that the activity on nematodes is due to the inhibition of enzymes following direct and extended contact with the nematocidal substance, and that this blocks the eggs hatching and the motility of the J2 larvae by inhibiting transport functions and metabolic pathways as well as blocking certain enzymes, especially those containing a sulfhydryl group.

### Method on Meloidogyne:

Extraction of root-knot nematodes taken from soil cultivated with basil *(Ocimum basilicum)* with strong infestation (J2 larvae) from about 500 cc of soil by means of a wool-paper filter (EPPO Bulletin 13,2013) and concentration in distilled water.

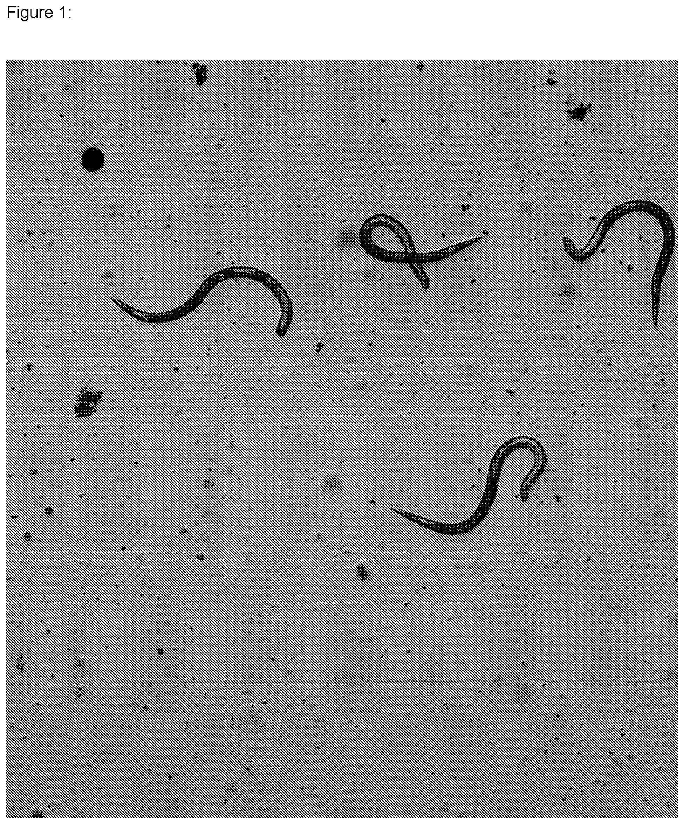

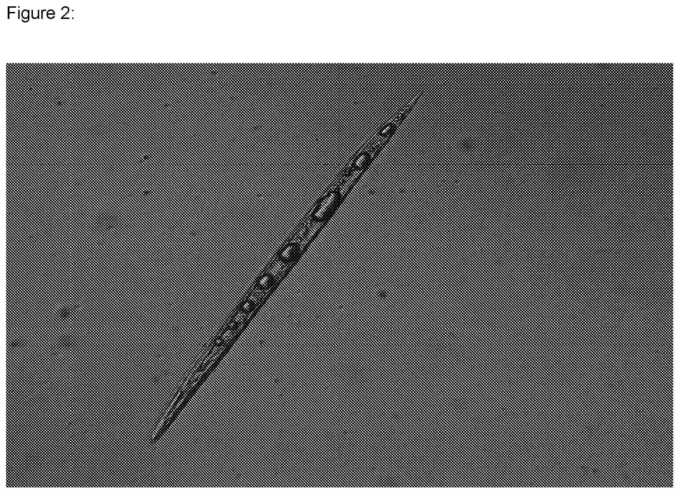

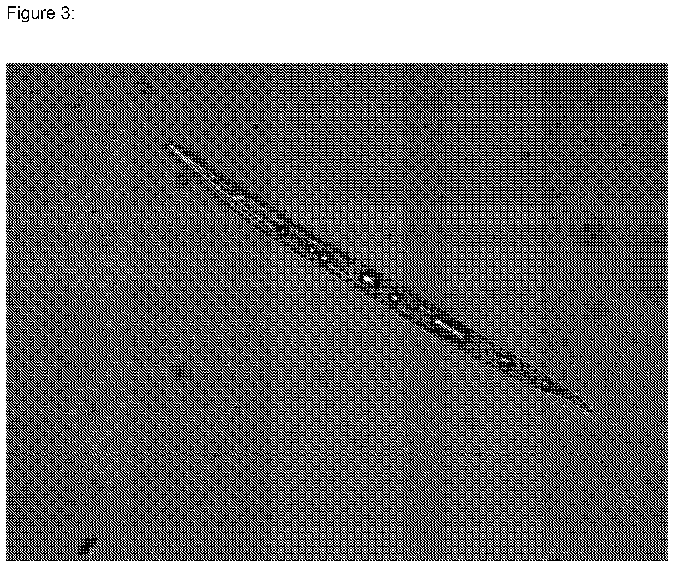

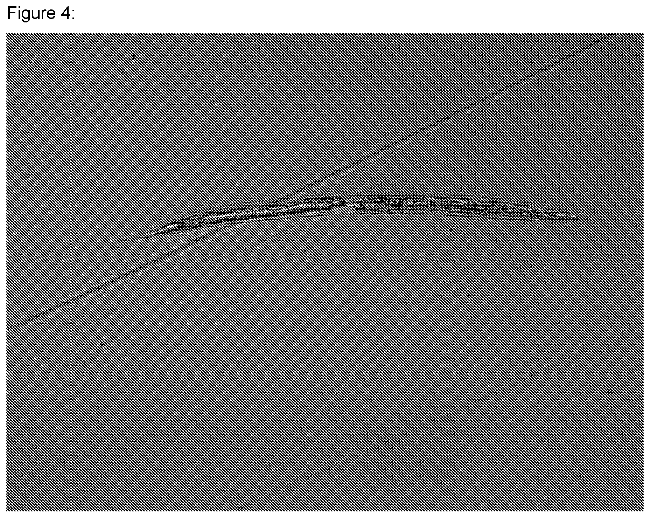

The following tests were considered:
- Untreated control (Figure 1)
- Reference: Abamectin at a concentration of 90 µg/ml (Figure 4)
- Test 1: Potassium Sorbate (80% purity) at a concentration of 250 µg/ml
- Test 2: Potassium Sorbate at a concentration of 500 µg/ml (Figure 2)
- Test 3: Potassium Sorbate at a concentration of 1 mg/ml (Figure 3) 4 replicates for each Test.

The Tests were established by adding an amount of stock solution to one ml of nematode suspension, so as to obtain the final established concentrations. Nematodes motility parameters were evaluated after 2 h and after 24 h exposure of the J2 larvae to the nematocidal substance.

In the first test, the count was carried out by microscopic observation of immobile nematodes after 2 hours exposure to the product, to evaluate a possible killing effect of the substance. In the second test, the count was carried out by microscopic observation of the nematodes considered dead with strong signs of tissue degeneration (thickening and blistering in the nematode body accompanied by the final folding of the body at right angle).

The results are summarized in Table 1 below:

| TEST | REPEAT NUMBER | READING % IMMOBILE J2 @ 2 H | % DEAD J2 @ 24 H |
|---|---|---|---|
| UNTREATED | 1 | 0% | 0% |
| | 2 | 0% | 0% |
| | 3 | 0% | 1% |
| | 4 | 0% | 1% |
| REFERENCE | 1 | 99% | 99% |
| | 2 | 98% | 100% |
| | 3 | 100% | 100% |
| | 4 | 99% | 100% |
| TEST 1 | 1 | 10% | 15% |
| | 2 | 5% | 12% |
| | 3 | 7% | 18% |
| | 4 | 2% | 10% |
| TEST 2 | 1 | 40% | 80% |
| | 2 | 38% | 76% |
| | 3 | 45% | 75% |
| | 4 | 43% | 75% |
| TEST 3 | 1 | 75% | 98% |
| | 2 | 75% | 99% |
| | 3 | 78% | 100% |
| | 4 | 80% | 96% |

A significant increase in the effect was observed with increasing dose and exposure of the nematode to the substance following 24h exposure; the washing to evaluate the possible "recovery" of the nematodes survived to the substance was not performed as the J2 nematodes considered dead had evident signs of degeneration (Figure 2 and Figure 3) similar but not identical to those observed in the reference abamectin (Figure 4); this allows us to hypothesize a different mechanism of action for the two substances: sorbic acid or derived salts thereof interfere with the metabolism and inhibition of some enzymes in a reversible way; the efficacy is therefore slower and increases with exposure to the product of our target, while abamectin simulates the neurotransmitter GABA that controls the permeability of neurons to chlorine ions, binding irreversibly to receptors instead of GABA, the activity of the nervous and muscular system is then inhibited and death occurs in a few minutes following contact with the product.

Checks were also carried out at 48 hours exposure to sorbic acid or salts thereof without obtaining statistically different results compared to the microscopic observation carried out at 24 hours.

The same method was carried out for the evaluation of product efficacy on other genera of *Ditylenchus* nematodes taken from soil with ongoing culture (Strawberry, *Fragaria x ananassa),* on *Globodera* taken from cysts present on potato roots *(Solanum tuberosum)* following *in vitro* incubation for 10 days at a temperature of 25°C in the absence of light, with results statistically comparable to those previously reported in the case of *Meloidogyne* at a dose of 1 mg/ml.

The results allow us to evaluate the substance as a candidate nematocide in sustainable agriculture, given the results obtained *in vitro* which are comparable to those of synthetic active substances already on the market with a much more disadvantageous ecotoxicological profile.

### Example 2:

### TEST ON Meloidogyne GALLS

In order to evaluate the efficacy in containing the root-knot nematode *Meloidogyne incognita,* several *in vitro* experimental tests were carried out using a sorbic acid solution containing 1 mg/ml of active substance at 98% purity. The average of the tests is reported.

This test concentration was tested on unsegmented and embryonated eggs of *M. incognita.*

An efficacy of sorbic acid at the tested concentration was observed, allowing the inhibition of egg embryogenesis and excellent action on larvae, both free and included in ovisacs.

The tests carried out were developed *in vitro* using double concave glass lenses, by introducing 2 ml of the test solution containing 1 mg/ml of sorbic acid, or sterile water in the case of the control. The incubation took place at a room temperature of 22°C, in the dark. The population of *M. incognita* was from plants raised in an open field of tomatoes *(Solanum lycopersicum).*

Unsegmented and embryonated eggs: the eggs were collected from the ovisacs and placed in a double concave glass lens in the presence of the solution to be tested. Counts of hatched larvae were carried out for 7 days with daily counting and microscopic observation. A substantial difference was observed between the sorbic acid-based solution and the control, as reported in Table 2 below:

**Table 2:**

| TEST | Day 1 DAT | Day 2 DAT | Day 3 DAT | Day 4 DAT | Day 5 DAT | Day 6 DAT | Day 7 DAT |
|---|---|---|---|---|---|---|---|
| Sorbic Acid | 0 | 0 | 0 | 0 | 0 | 1% | 3% |
| Control | 0 | 2% | 5% | 12% | 17% | 26% | 32% |

### Example 3:

### FIELD TEST.

During the development phase, a field screening test was planned to confirm the effect of the active substance, in addition to the one known *in vitro.* The trial was followed by a test center (third body) in the Vittoria area (RG) in greenhouses with continuous cycles of courgette *(Cucurbita pepo)* subjected to strong pressure of *M. incognita* nematodes. The product denoted as (GON.INV.98), represented by potassium sorbate, CAS number 24634-61-5, was applied with a dosage of 10 kg/ha dissolved in water and distributed according to pre-established volumes through hose/tape based on calendar applications. First application at day 1 after transplantation (DAT), second application at day 7 DAT, third application at day 21 DAT.

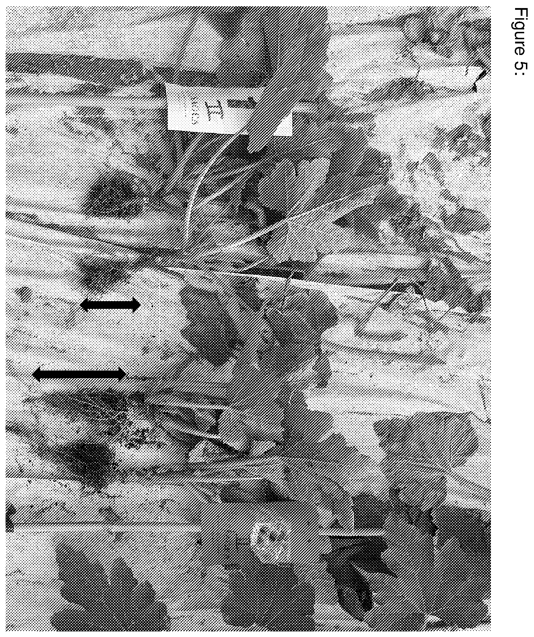

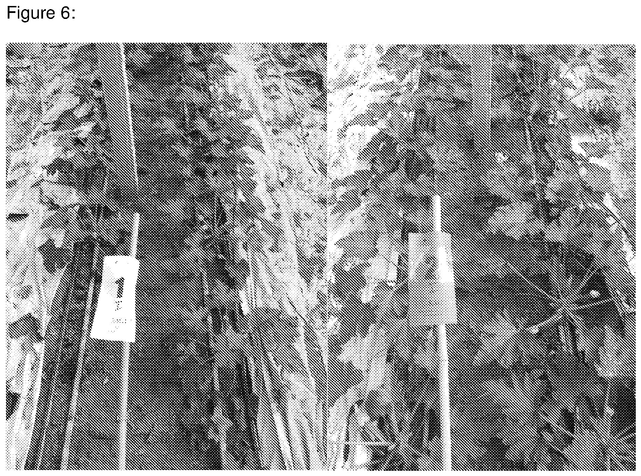

The follow-up was scheduled at day 45 (Figure 5 and Figure 6) and day 90 after the first treatment. The results, both in statistical terms and in terms of plant vigor (Figure 5 and Figure 6), allow us to highlight an excellent efficacy also in field, and therefore confirm that sorbic acid (and salts thereof) may be new candidate nematocides for the European Pharmacopoeia. Following this screening trial, new large-scale tests will begin to establish optimal doses, modes and volume of distribution. From Table 3 below, it was possible to evaluate the % of nematode attack with a count of the damage present on the root system (galls).

**Table 3:**

| **Investigations on root galls** | | | |
|---|---|---|---|
| **Evaluation of root galls on 5 plants/plot (% severity of attack)** | | | |
| **Repl.** | **Plants** | **Untreated T1** | **T2 GON.INV.98 10 kg/ha** |
| **I** | **1** | 50 | 10 |
| | **2** | 30 | 30 |
| | **3** | 30 | 0 |
| | **4** | 30 | 0 |
| | **5** | 30 | 10 |
| **II** | **6** | 20 | 10 |
| | **7** | 30 | 0 |
| | **8** | 30 | 0 |
| | **9** | 50 | 10 |
| | **10** | 30 | 25 |
| **III** | **11** | 40 | 25 |
| | **12** | 40 | 0 |
| | **13** | 40 | 0 |
| | **14** | 20 | 10 |
| | **15** | 20 | 20 |
| **IV** | **16** | 20 | 15 |
| | **17** | 20 | 10 |
| | **18** | 30 | 0 |
| | **19** | 30 | 0 |
| | **20** | 20 | 15 |

It is evident that the percentage values of the severity of attack are drastically reduced by the use of the product denoted as (GON.INV.98).

Furthermore, from Table 4 below, it was possible to evaluate the effect on the plant vigor and production

**Table 4**

| **Total production of 20 plants from field** | | | | | |
|---|---|---|---|---|---|
| | | **No. courgettes** | **Weight in kg** | **No. courgettes** | **Weight in kg** |
| **Repl.** | **Plants** | **Untreated T1** | | **T2 GON.INV.98 10 kg/ha** | |
| **I** | **1** | 12 | 2.5 | 17 | 4.2 |
| | **2** | 14 | 2.98 | 14 | 3.6 |
| | **3** | 12 | 2.6 | 15 | 3.4 |
| | **4** | 18 | 3.88 | 14 | 3.64 |
| | **5** | 15 | 2.92 | 15 | 3.88 |
| **II** | **6** | 14 | 3.12 | 14 | 3.62 |
| | **7** | 12 | 2.64 | 14 | 3.46 |
| | **8** | 12 | 2.78 | 18 | 3.9 |
| | **9** | 13 | 2.6 | 16 | 3.86 |
| | **10** | 19 | 4.16 | 18 | 3.76 |
| **III** | **11** | 14 | 3.12 | 17 | 3.42 |
| | **12** | 18 | 4.12 | 14 | 3.6 |
| | **13** | 16 | 3.28 | 18 | 3.86 |
| | **14** | 19 | 3.98 | 16 | 3.68 |
| | **15** | 15 | 3.12 | 18 | 3.98 |
| **IV** | **16** | 12 | 2.6 | 17 | 4.12 |
| | **17** | 11 | 2.46 | 14 | 3.68 |
| | **18** | 15 | 3.12 | 18 | 4.52 |
| | **19** | 14 | 3.06 | 15 | 3.86 |
| | **20** | 12 | 2.46 | 13 | 3.52 |
| **Average production of a plant** | | 14.35 | 3.08 | 15.75 | 3.78 |
| **Average weight** of a **courgette** | | | **0.21** | | **0.24** |

In fact, a significant increase in the quantity of fruits is highlighted, as well as a higher weight of these, thus proving the nematocidal effect (which significantly affects the qualitative-quantitative production) of the application of potassium sorbate, without leading to toxicity or damage of the root system.

From the foregoing, it is possible to state that sorbic acid has shown good nematocide and nematostatic activity both *in vitro* and in field. In this way we can state that the substance is a hypothetical future solution for nematodes control in the open field, especially in the early stages; post-sowing, or post-transplant.

## Claims

1. Use of a sorbic acid salt, for killing a pest belonging to the phylum of nematodes, wherein said sorbic acid salt is present in an effective dose, wherein said effective dose allows to kill at least 70% of nematodes, and wherein said sorbic acid salt is the only active substance having a nematocidal effect and wherein said use is non-therapeutic.

2. The use according to claim 1, wherein said sorbic acid salt is selected from the group consisting of potassium sorbate, calcium sorbate, sodium sorbate, and salts deriving from the reaction with alkali metals.

3. The use according to claim 1 or 2, wherein said sorbic acid salt is present in a composition comprising an agrochemically acceptable carrier, additive, surfactant, adjuvant, or diluent.

4. The use according to claim 3, wherein said composition is formulated in the form of granules, powder, emulsion, spray, aerosol, capsule, microcapsule, gel, or wetting agent.

5. The use according to any one of claims 1 to 4, wherein said pest belongs to a genus selected from the group consisting of *Meloidogyne, Ditylenchus, Globodera* or *Heterodera.*

6. The use according to any one of claims 1 to 5, wherein said pest belongs to a species selected from the group consisting of *Meloidogyne incognita, Meloidogyne arenaria, Meloidogyne hapla* or *Meloidogyne enterolobii.*

7. The use according to any one of claims 1 to 6, for the treatment of a substrate, preferably said substrate being an agricultural substrate.

8. The use according to claim 7, wherein said agricultural substrate is a substrate in which plant roots develop, preferably said agricultural substrate being selected from the group consisting of a growing medium, soil, or loam.

## Patentansprüche

1. Verwendung von Sorbinsäuresalz zum Abtöten eines Schädlings, der zum Stamm der Nematoden gehört, wobei das Sorbinsäuresalz in einer wirksamen Dosis vorhanden ist, wobei die wirksame Dosis das Abtöten von mindestens 70 % der Nematoden ermöglicht, und wobei das Sorbinsäuresalz der einzige Wirkstoff mit einer nematoziden Wirkung ist und wobei die Verwendung nicht therapeutisch ist.

2. Verwendung nach Anspruch 1, wobei das Sorbinsäuresalz ausgewählt ist aus der Gruppe, bestehend aus Kaliumsorbat, Calciumsorbat, Natriumsorbat und Salzen, die aus der Reaktion mit Alkalimetallen stammen.

3. Verwendung nach Anspruch 1 oder 2, wobei das Sorbinsäuresalz in einer Zusammensetzung vorhanden ist, die einen Träger, einen Zusatzstoff, ein Tensid, einen Hilfsstoff oder ein Verdünnungsmittel umfasst, der/das agrochemisch verträglich ist.

4. Verwendung nach Anspruch 3, wobei die Zusammensetzung in Form eines Granulats, Pulvers, einer Emulsion, eines Sprays, Aerosols, Kapseln, Mikrokapseln, eines Gels oder Benetzungsmittels formuliert ist.

5. Verwendung nach einem der Ansprüche 1 bis **4,** wobei der Schädling zu einer Gattung gehört, die ausgewählt ist aus der Gruppe, bestehend aus *Meloidogyne, Ditylenchus, Globodera* oder *Heterodera.*

6. Verwendung nach einem der Ansprüche 1 bis 5, wobei der Schädling zu einer Art gehört, die ausgewählt ist aus der Gruppe, bestehend aus *Meloidogyne incognita, Meloidogyne arenaria, Meloidogyne hapla* oder *Meloidogyne enterolobii.*

7. Verwendung nach einem der Ansprüche 1 bis 6 zur Behandlung eines Substrats, wobei das Substrat vorzugsweise ein landwirtschaftliches Substrat ist.

8. Verwendung nach Anspruch 7, wobei das landwirtschaftliche Substrat ein Substrat ist, in dem sich Pflanzenwurzeln entwickeln, wobei das landwirtschaftliche Substrat vorzugsweise ausgewählt ist aus der Gruppe, bestehend aus einem Nährmedium, Erde oder Lehm.

## Revendications

1. Utilisation d'un sel d'acide sorbique, pour tuer un nuisible appartenant au phylum des nématodes, dans laquelle ledit sel d'acide sorbique est présent à une dose efficace, dans laquelle ladite dose efficace permet de tuer au moins 70 % des nématodes, et dans laquelle ledit sel d'acide sorbique est la seule substance active ayant un effet nématicide et dans laquelle ladite utilisation est non thérapeutique.

2. Utilisation selon la revendication 1, dans laquelle ledit sel d'acide sorbique est choisi dans le groupe constitué par le sorbate de potassium, le sorbate de calcium, le sorbate de sodium et les sels dérivés de la réaction avec les métaux alcalins.

3. Utilisation selon la revendication 1 ou 2, dans laquelle ledit sel d'acide sorbique est présent dans une composition comprenant un excipient, additif, tensioactif, adjuvant ou diluant agrochimiquement acceptable.

4. Utilisation selon la revendication 3, dans laquelle ladite composition est formulée sous forme de granulés, poudre, émulsion, pulvérisation, aérosol, capsule, microcapsule, gel ou agent mouillant.

5. Utilisation selon l'une quelconque des revendications 1 à **4,** dans laquelle ledit nuisible appartient à un genre choisi dans le groupe constitué par *Meloidogyne, Ditylenchus, Globodera* ou *Heterodera.*

6. Utilisation selon l'une quelconque des revendications 1 à 5, dans laquelle ledit nuisible appartient à une espèce choisie dans le groupe constitué par *Meloidogyne incognita, Meloidogyne arenaria, Meloidogyne hapla* ou *Meloidogyne enterolobii.*

7. Utilisation selon l'une quelconque des revendications 1 à 6, pour le traitement d'un substrat, de préférence ledit substrat étant un substrat agricole.

8. Utilisation selon la revendication 7, dans laquelle ledit substrat agricole est un substrat dans lequel des racines de plantes se développent, de préférence ledit substrat agricole étant choisi dans le groupe constitué d'un milieu de culture, sol ou terreau.
